# EUROPEAN PATENT APPLICATION

(11) **EP 3 883 293 A1**
(43) Date of publication of application: **22.09.2021**
(21) Application number: 19891986.2
(22) Date of filing: 17.09.2019
(51) Int. Cl.: H04W 28/08, H04L 12/709

(54) **NETWORK SHUNTING METHOD AND RELEVANT DEVICE**

(30) Priority: 03.12.2018 CN 201811468247
(71) Applicant: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Ipside
(86) International application number: PCT/CN2019/106209
(87) International publication number: WO 2020/114038

(57) **Abstract**

Disclosed are a network offload method and a relevant device. The method is applied to an electronic device. The electronic device is currently in a link aggregation starting state, and when the electronic device is in the link aggregation starting state, the electronic device uses a mobile data network module corresponding to a mobile data network and a wireless network module corresponding to a set wireless network to process a data flow. The method comprises: when at least one event currently processed by the electronic device comprises a first event, determining a current movement speed of the electronic device, wherein an important priority of the first event is greater than or equal to a preset priority; and when the current movement speed of the electronic device is greater than or equal to a first threshold value, shunting the data flow associated with the first event to the wireless network module for data processing. The embodiments of the present application can improve the stability of data transmission in certain scenarios.

## Description

### TECHNICAL FIELD

The present disclosure relates to the field of electronic technologies, and in particular, to a network offload method and related device.

### BACKGROUND

Link aggregation enables electronic devices (such as smart phones) to use two or more network modules (such as a wireless network module, a data network module, etc.) to transmit data at the same time. The link aggregation is an important technology in increasing link bandwidth, realizing link transmission flexibility and redundancy. In some scenarios, stability of data transmission cannot be guaranteed by using link aggregation function.

### SUMMARY

The embodiments of the present disclosure provide a network offload method and a related device for improving the stability of data transmission in some scenarios.

In the first aspect, some embodiments of the present disclosure provide a network offload method. The network offload method is applied to an electronic device. The electronic device is currently in a state where link aggregation is turned on, and the electronic device processes data flows through a data network module corresponding to a mobile data network and a wireless network module corresponding to a setting wireless network in response to the electronic device being in the state where the link aggregation is turned on. The network offload method comprises: determining a current moving speed of the electronic device in response to at least one event currently processed by the electronic device comprising a first event, and important priority of the first event being greater than or equal to preset priority; and distributing data flows associated with the first event to the wireless network module for data processing in response to the current moving speed of the electronic device being greater than or equal to a first threshold.

In the second aspect, some embodiments of the present disclosure provide a network offload device. The network offload device is applied to an electronic device. The electronic device is currently in a state where link aggregation is turned on, and in response to the electronic device being in the state where the link aggregation is turned on, the electronic device processes data flows through a data network module corresponding to a mobile data network and a wireless network module corresponding to a setting wireless network. The network offload device comprises a determination unit and an offload unit. The determination unit is configured to determine a current moving speed of the electronic device in response to at least one event currently processed by the electronic device comprising a first event and important priority of the first event is greater than or equal to a preset priority. An offload unit is configured to distribute data flows associated with the first event to the wireless network module for data processing in response to the current moving speed of the electronic device being greater than or equal to a first threshold.

In the third aspect, some embodiments of the present disclosure provide an electronic device. The electronic device comprises a processor, a memory, a communication interface and one or more programs. The one or more programs are stored in the memory and configured to be executed by the processor, the one or more programs comprise instructions for performing the operations in the method described in the first aspect of the embodiments of the present disclosure.

In the fourth aspect, some embodiments of the present disclosure provide a computer-readable storage medium. The computer-readable storage medium stores computer programs that, when executed by a processor, cause the processor to realize the method described in the first aspect of the embodiments of the present disclosure.

In the fifth aspect, some embodiment of the present disclosure provide a computer program product. The computer program product comprises a non-transitory computer-readable storage medium storing the computer program. The computer program makes a computer perform part or all of operations of any method described in the first aspect of the embodiments of the present disclosure. The computer program product can be a software installation package.

It can be seen that in the embodiments of the present disclosure, in response to the electronic device being in the state where link aggregation is turned on and the at least one event currently processed by the electronic device comprises the first event, the moving speed of the electronic device is determined. In response to the moving speed being greater than or equal to the first threshold, the data flows associated with the first event are distributed to the wireless network module for data processing. It can be seen that in a high-speed scenario, only the wireless network module is used to process the data flows associated with the first event, thus avoiding instability of the data transmission associated with the first event due to instability of the mobile data network at high speed, and further improving stability of some data transmission in the high-speed scenario.

These or other aspects of the present disclosure will be more easily understood in the description of the following embodiments.

### BRIEF DESCRIPTION OF THE DRAWINGS

In order to make the technical solution described in the embodiments of the present disclosure or prior art more clearly, the drawings used for the description of the embodiments will be briefly described. Apparently, the drawings described below are only for illustration, but not for limitation. It should be understood that, one skilled in the art may obtain other drawings based on these drawings, without making any inventive work.
FIG. 1A is a schematic diagram of a program running space of a smart phone provided by some embodiments of the present disclosure.
FIG. 1B is a system architecture diagram of an Android system provided by some embodiments of the present disclosure.
FIG. 2 is a flow chart of a network offload method provided by some embodiments of the present disclosure.
FIG. 3 is a flow chart of another network offload method provided by some embodiments of the present disclosure.
FIG. 4 is a structural schematic diagram of another electronic device provided by some embodiments of the present disclosure.
FIG. 5 is a structural schematic diagram of a network offload device provided by some embodiments of the present disclosure.

### DETAILED DESCRIPTION OF THE PREFERRED EMBODIMENTS

In order to facilitate the understanding of the present disclosure, the present disclosure will be described more fully below with reference to the relevant drawings. The drawings show some embodiments of the present disclosure. Apparently, the described embodiments are only a part of the embodiments of the present disclosure, not all of the embodiments. All other embodiments obtained by those skilled in the art based on the embodiments of the present disclosure without creative efforts shall fall within the protection scope of the present disclosure.

The following is a detailed description.

The terms "first", "second", "third" and "fourth" in the present disclosure are used to distinguish different objects, rather than to describe a specific order. In addition, the terms "comprise" and "include" and any variations of the two terms are intended to cover exclusive inclusion. For example, a process, method, system, product or device comprising a series of steps or modules is not limited to the listed steps or modules, but some embodiments also include steps or modules not listed, or some embodiments also include other steps or modules inherent to these processes, methods, products or devices.

Reference to "embodiments" herein means that specific features, structures or characteristics described the embodiments may be included in at least one embodiment of the present disclosure. The presence of the term in various places in the description does not necessarily refer to the same embodiment, nor is it an independent or alternative embodiment mutually exclusive with other embodiments. It is explicitly and implicitly understood by those skilled in the art that the embodiments described herein may be combined with other embodiments.

The embodiments of the present disclosure will be described with reference to the accompanying drawings.

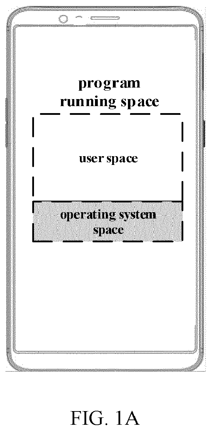

As shown in FIG. 1A, smart phones and other electronic devices are generally provided with a program running space. The program running space may include a user space and an operating system space. One or more applications can run in the user space. The one or more applications are third party applications installed on an electronic device. A software algorithm of a network offload method described in some embodiments of the present disclosure can be run in the user space. An operating system of the electronic device can be run in the operating system space.

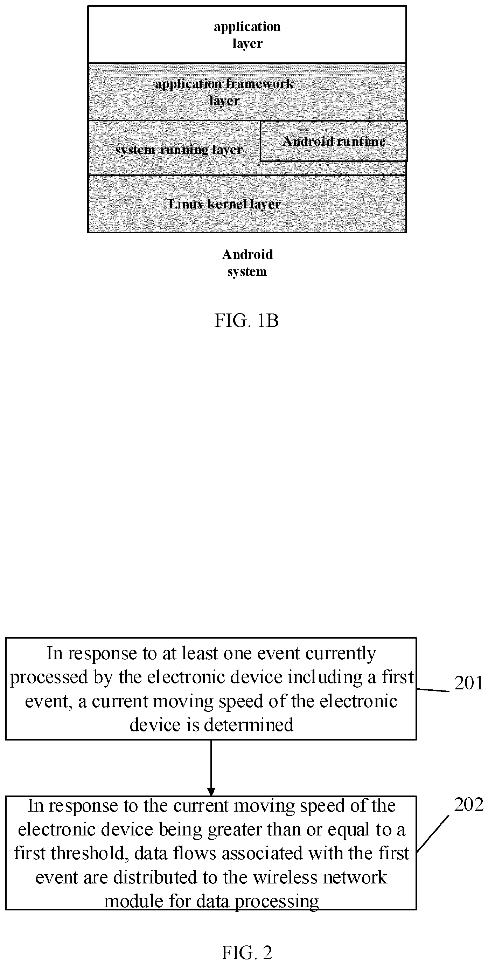

The electronic device can run Android system, or a mobile operating system IOS developed by Apple Inc. and the like. There is no specific limitation here. As shown in FIG. 1B, taking the Android system being run on the electronic device as an example, the user space may include application layer in the Android system, and the operating system space can include an application framework layer, a system running layer (including libraries and Android runtime), and a Linux kernel layer in the Android system. The application layer may include all kinds of applications directly interacting with users, or service programs written by Java language running in background, for example, applications with common basic functions realized by the smart phone, such as short messaging service (SMS), phone dialing, picture browser, calendar, games, maps, world wide web browser, and other applications developed by developers. The application framework layer provides a series of class libraries for developing Android applications, which can be used for reusing components, and can also achieve personalized extensions through inheritance. The system running layer supports application framework, which provides services for various components in the Android system. The system running layer consists of system class libraries and the Android runtime. The Android runtime may include core library and Dalvik virtual machine. The Linux kernel layer is used to realize core functions of hardware device driver, process and memory management, network protocol stack, power management, wireless communication and so on.

Electronic devices can include various handheld devices, on-board devices, wearable devices (such as smart watches, smart bracelets, pedometers, and the like) with wireless communication functions, computing devices or other processing devices connected to wireless modems, as well as various forms of user equipment (UE) and mobile station (MS), terminal device, and the like. For convenience of description, the above-mentioned devices are collectively called as electronic devices.

The embodiments of the present disclosure are specifically described below.

As shown in FIG. 2. FIG. 2 is a flow chart of a network offload method provided by some embodiments of the present disclosure. The flow chart of a network offload method is applied to the electronic device. The electronic device is currently on a state wherein link aggregation is turned on. In response to the electronic device being on the state where the link aggregation is turned on, the electronic device may process data flows through a data network module corresponding to a mobile data network and a wireless network module corresponding to a setting wireless network. The method may include the following operations.

At block 201, in response to at least one event currently processed by the electronic device including a first event, a current moving speed of the electronic device is determined, and important priority of the first event is greater than or equal to preset priority.

The first event may be a mobile payment event, a navigation event, a work mail sending event, and the like. The important priority of the first event can be preset by a system or set by a user according to his or her own usage habits. There is no limitation here.

Alternatively, a specific implementation method for determining the current moving speed of the electronic device is as follows: obtaining a first geographical position of the electronic device at first preset time; obtaining a second geographical position of the electronic device at second preset time; and determining the current moving speed based on the first preset time, the second preset time, the first geographical position and the second geographical position.

The at least one event currently processed by the electronic device may include at least one event being processed by background and/ or at least one event being processed by foreground. The first event can be an event being processed by the foreground of the electronic device or an event being processed by the background of the electronic device. There is no limitation here.

At block 202, in response to the current moving speed of the electronic device being greater than or equal to a first threshold, data flows associated with the first event are distributed to the wireless network module for data processing.

The first threshold can be 30km/ h, 60km/ h, 90km/ h or other values. There is no limitation here.

The wireless network module is configured to process interactive data between devices connected through a wireless network. The number of setting wireless networks can be one or multiple. There is not limitation here. Different setting wireless networks correspond to different wireless network modules. The setting wireless network may be a mobile phone hotspot, a car hotspot (such as car WiFi), a near field communication (NFC) hotspot, a Bluetooth hotspot, and the like.

For example, high-speed rail has become a most common means of transportation for people. A speed of Fuxing in China has reached 350 km/ h. In the high-speed rail, people often need to use mobile phone to pay for food or drink. Due to fast speed of the high-speed rail and frequent frequency conversion between different cellular cells, network signals may be unstable causing payment of mobile data network payment often failing, resulting in poor using experience. In the embodiment of the present disclosure, The mobile payment event can be set as the first event. In response to the at least one event currently processed by the electronic device including the mobile payment event, a moving speed of the electronic device is calculated. In response to the moving speed being greater than or equal to 200km/ h (here 200km/ h is the preset first threshold), the electronic device may distribute data flows associated with the mobile payment event to the wireless network module for data processing.

It can be seen that in the embodiment of the present disclosure, in response to the electronic device being in the state where the link aggregation is turned on and the at least one event currently processed by the electronic device including the first event, the moving speed of the electronic device is determined; in response to the moving speed being greater than or equal to the first threshold, the data flows associated with the first event are distributed to the wireless network module for data processing. It can be seen that in a high-speed scenario, only the wireless network module is used to process the data flows associated with the first event, which can avoid instability of data transmission associated with the first event due to instability of a mobile data network at high speed, and further improve stability of some data transmission in the high-speed scenario.

In one embodiment of the present disclosure, the method may further include following operations.

In response to the at least one event further including a second event, data flows associated with the second event are distributed to the data network module for data processing, and important priority of the second event may be less than the preset priority.

The second event is different from the first event, and the second event can be music playing, downloading (music, video, file, picture, etc.), and the like. The important priority of the second event can be preset by the system or set by the user according to his or her own usage habits. There is not limitation here.

The data network module is configured to process interactive data between devices connected through the mobile data network. The mobile data network may include 2-Generation wireless telephone technology (2G) network, 3rd-Generation wireless telephone technology (3G) network, long term evolution (LTE) work, 5th-Generation wireless telephone technology (5G) network, and the like.

It can be seen that in the embodiment of the present disclosure, in response to the electronic device being in the state where the link aggregation is turned on, the data flows associated with the second event may be distributed to the data network module for data processing, thus preventing the second event from occupying the wireless network module, avoiding the instability of data transmission associated with the first event due to processing the second event, and improving the stability of some data transmission in the high-speed scenario.

In one embodiment of the present disclosure, after distributing the data flows associated with the first event to the wireless network module for data processing, the method may further include following operations.

In response to the first event being completely processed and the second event being not completely processed, remaining data flows associated with the second event are distributed to the wireless network module and the data network module for data processing together.

For example, the first event is the mobile payment, the second event is playing music and downloading video. In response to the user completing the payment with mobile payment, the background completing downloading video, but not completing playing music, under these circumstances, data flows associated with playing music are distributed to the wireless network module and the data network module for data processing together.

It can be seen that in the embodiment of the present disclosure, in response to the first event being completely processed and the second event being not completely processed, the remaining data flows associated with the second event are distributed to the wireless network module and data network module for data processing together, thus improving transmission efficiency of the remaining data after the first event is completely processed.

In one embodiment of the present disclosure, the method may further include following operations.

In response to the current moving speed of the electronic device being less than the first threshold, first peak transmission rates of the wireless network module and the data network module are obtained respectively.

Offload weights of the wireless network module and the data network module are determined respectively according to obtained first peak transmission rates.

Data flows associated with the at least one event are distributed to the wireless network module and the data network module according to determined offload weights.

An offload weight is used to represent importance of distributing the data flows.

The determined offload weights correspond to the wireless network module and the data network module one by one. A sum of the determined offload weights is equal to 1.

For example, suppose that there are 2 setting wireless networks, for example, a first setting wireless network and a first setting wireless network, then there are 3 first peak transmission rates obtained by the electronic device, there are 3 offload weights are determined respectively according to the 3 first peak transmission rates, and a sum of the 3 offload weights is equal to 1.

Alternatively, a specific implementation method that the electronic device determines the offload weights of the wireless network module and the data network module respectively according to the obtained first peak transmission rates may include following operations.

The electronic device determines the offload weights of the wireless network module and the data network module respectively according to the obtained first peak transmission rates and a first formula. The first formula is W=V/ M, the W is an offload weight, the V is a peak transmission rate, and the M is a sum of the obtained first peak transmission rates.

For example, suppose that there are 2 setting wireless networks, for example, the first setting wireless network and a first setting wireless network. A first peak transmission rate of a wireless network module of the first wireless network is a, a first peak transmission rate of a wireless network module of the second setting wireless network module is b and a first peak transmission rate of the data network module is c, then an offload weight of the wireless network module of the first setting wireless network is (a)/ (a+b+c), an offload weight of the wireless network module of the second setting wireless network is (b)/ (a+b+c), an offload weight of the data network module is (c)/ (a+b+c).

Alternatively, the specific implementation method that the data flows associated with the at least one event are distributed to the wireless network module and the data network module according to the determined offload weights may include the following operations: the electronic device distributes the data flows to the wireless network module and the data network module according to the number of data flows currently established by the electronic device and the determined offload weights.

For example, in the embodiment of the present disclosure, network modules used for the link aggregation is the wireless network module and the data network module. It is determined that the offload weight of the wireless network module is 1/3, and the offload weight of the data network module is 2/3. If there are 3 data flows currently established by the electronic device, the electronic device will distribute 1 data flow to the wireless network module and 2 data flows to the data network module. For another example, suppose that the network modules used for the link aggregation is the wireless network module and the data network module. It is determined that the offload weight of the wireless network module is 1/3, and the offload weight of the data network module is 2/3. If there are 4 data flows currently established by the electronic device, then the electronic device will distribute 1 data flow to the wireless network module and 3 data flows to the data network module.

The data flows may be a set of data packets of same data type. For example, video packets belong to a same data flow, and picture packets belong to a same data flow.

It can be seen that in the embodiment of the present disclosure, in response to the link aggregation being turned on and the current moving speed being less than the first threshold, the electronic device may respectively obtain current peak transmission rates of the wireless network module and the data network module for link aggregation, and then determine the offload weights of the wireless network module and the data network module based on determined peak transmission rates, and finally the data flows may be distributed to the wireless network module and data network module based on the determined offload weights, thus realizing reasonable distributing the data flows to the wireless network module and the data network module in a link aggregation state, and further improving the stability of data transmission.

In one embodiment of the present disclosure, before the data flows associated with the at least one event are distributing to the wireless network module and the data network module according to the determined offload weights, the method may further include following operations.

In response to network quality of the setting wireless network being less than or equal to network quality of the mobile data network, it is determined whether a data plan of the mobile data network is a special data plan. The special data plan may include an exclusive data plan jointly launched by a third party and an operator, or an unlimited data plan separately launched by the operator, and the exclusive data plan allows a specific application to use without limiting data.

In response to determining that the specific application dose not include an application associated with the at least one event, or that the special data plan is not the unlimited data plan, the data flows associated with the at least one event are distributed to the wireless network module and the data network module for data processing together.

Alternatively, a specific implementation method for determining that the network quality of the setting wireless network is less than or equal to the network quality of the mobile data network may be as follows: detecting whether a network analysis application is installed on the electronic device; in response to the network analysis application being installed, the network analysis application is turned on; and setting the network quality of the setting wireless network and the network quality of the mobile data network based on the network analysis application; in response to network signal intensity of the setting wireless network being less than or equal to network signal intensity of the mobile data network, determining that the network quality of the setting wireless network is less than or equal to the network quality of the mobile data network.

It should be noted that the electronic device can also determine that the network quality of the setting wireless network is less than or equal to the network quality of the mobile data network through network management application page of the electronic device. There is not specific description here.

The exclusive data plan jointly launched by the third party and the operator may be Tencent king card data plan, Tencent little king card data plan, ant treasure card data plan, dream e card data plan, Dasheng card data plan, Xiaoqiang card data plan, and the like.

Alternatively, a specific implementation method for the electronic device determining whether the data plan of the mobile data network is the special data plan may include the following operations.

The electronic device obtains a short message about a data plan stored in the electronic device. The electronic device obtains at least one keyword by parsing the short message. In response to the electronic device including a preset keyword in the at least one keyword, it is determined that the data plan of the mobile data network used by the electronic device is the special data plan, and the preset keyword is related to the special data plan; in response to the at least one keyword not including a preset keyword, the electronic device determines that the data plan of the mobile data network used by the electronic device is not the special data plan.

For example, suppose that a data plan used by the user is Tencent king card data plan and the first event is navigation, a specific application in Tencent king card data plan is an application produced by Tencent, and the specific application does not include an application of map navigation, it is determined that the specific application does not include an application associated with the first time.

In one implementation method of the present disclosure, the method may further include the following operations.

In response to determining that the specific application includes the application associated with the at least one event, or the special data plan is the unlimited data plan, the data flows associated with the at least one event are distributed to the data network module for data processing.

It can be seen that in the embodiment of the present disclosure, when the network quality of the setting wireless network is less than or equal to the network quality of the mobile data network, if the user uses the special data plan and the specific application does not include the application associated with the first event or the special data plan is not the unlimited data plan, the data flows associated with at least one event are distributed to the wireless network module and the data network module for data processing together, if the user uses the special data plan and the specific application includes the application associated with the first event or the special data plan is the unlimited data plan, the data flows associated with at least one event are distributed to the data network module for data processing. By adopting the embodiment of the present disclosure, the network offload under the special data plan is realized.

In one implementation method of the present disclosure, after the data flows associated with the first event are distributed to the wireless network module for data processing, the method may further include the following operations.

Connection information of a plurality of wireless network channels within a preset distance to the setting wireless network is determined.

A first wireless network channel currently used by the wireless network module is determined according to the connection information.

In response to signal intensity of the first wireless network channel being less than preset signal intensity, a second wireless network channel is selected from the plurality of wireless network channels, and signal intensity of the second wireless network channel is greater than or equal to the preset signal intensity.

A wireless network channel used by the wireless network module is switched to the second wireless network channel.

The preset distance can be 10m, 30m, 50m, 100m or other values. There is not limitation here.

The connection information includes signal intensity and connection number.

The first wireless network refers to a working channel of a router. There are two common frequency bands: 2.4G band and 5G band. A frequency range of 2.4G band is 2.4GHZ-2.4835GHZ, and a frequency range of 5G band is 5.15GHZ-5.825GHZ. 2.4G band is provided with 14 channels, but only first 13 channels are allowed in China. Each channel is 22MHZ wide, only 20MH is used to transmit data, and 2MHZ is used to isolate channels. A total of 83.5MHZ can be used for 2.4G, and most channels overlap. An interval of center frequency of each channel is 5MHZ Signal intensity of each channel can be same or different. The signal intensity of a channel is negatively correlated with the number of routers currently connected to the channel. The more the number of connected routers, the greater the degree of mutual interference and the weaker the signal intensity. The mapping relationship of channel, center frequency and frequency range of 2.4GH is shown in Table 1.

**Table 1**

| channel | center frequency (MHZ) | frequency range (MHZ) |
|---|---|---|
| 01 | 2412 | 2401-2423 |
| 02 | 2417 | 2406-2428 |
| 03 | 2422 | 2411-2433 |
| 04 | 2427 | 2416-2438 |
| 05 | 2432 | 2421-2443 |
| 06 | 2437 | 2426-2448 |
| 07 | 2442 | 2431-453 |
| 08 | 2447 | 2426-2448 |
| 09 | 2452 | 2441-2463 |
| 10 | 2457 | 2446-2468 |
| 11 | 2462 | 2451-2473 |
| 12 | 2467 | 2456-2478 |
| 13 | 2472 | 2461-2483 |

Alternatively, a specific implementation method of switching the wireless network channel used by the wireless network module to the second wireless network channel may include the following operations.

The electronic device obtains a management website, a login account and a login password of the router. The electronic device enters a management page of the router based on the management website, the login account and the login password. The electronic device obtains the number of electronic devices accessing different channels by querying the management page. The electronic device will switch the wireless network channel used by the wireless network module of the router to the second wireless network channel based on the number of electronic devices accessing different channels.

The first wireless network channel may be the same as or different from the second wireless network channel. There is not limitation here.

It can be seen that in the embodiment of the present disclosure,, after the data flows associated with the first event are distributed to the wireless network module for data processing, in response to the signal intensity of the first wireless network channel being less than the preset signal intensity, the first wireless network channel used by the wireless network module is switched to the second wireless network channel with signal intensity greater than or equal to the preset signal intensity. Thus, the stability of some data transmission is improved in high-speed scenarios.

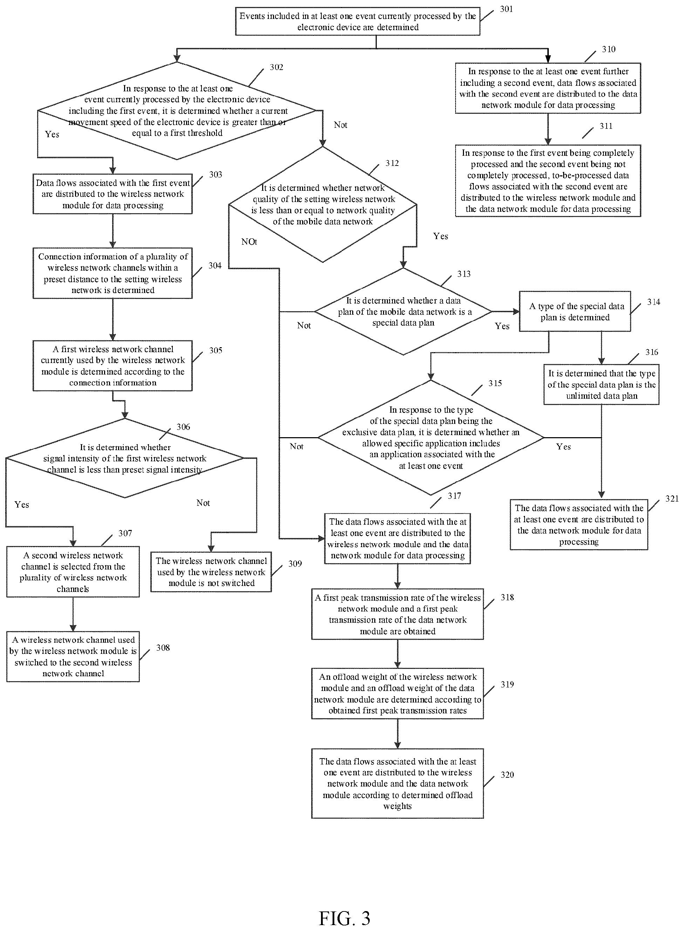

In accordance with the embodiment shown in FIG. 2, as shown in FIG. 3, FIG. 3 is a flow chart of a network offload method provided by some embodiments of the present disclosure. The network offload method is applied to an electronic device. The electronic device is currently in a state where link aggregation is turned on. In response to the electronic device being in the state where the link aggregation is turned on, the electronic device may process data flows through a data network module corresponding to a mobile data network and a wireless network module corresponding to a setting wireless network. The method may include the following operations.

At block 301, events included in at least one event currently processed by the electronic device are determined.

In response to the first event is included, operations at 302 are performed.

In response to the second event is included, operations at 310 are performed.

At block 302, in response to the at least one event currently processed by the electronic device including the first event, it is determined whether a current movement speed of the electronic device is greater than or equal to a first threshold.

If the answer is "Yes", operations at 303 are performed.

If the answer is "Not", operations at block 312 are performed.

At block 303, data flows associated with the first event are distributed to the wireless network module for data processing.

At block 304, connection information of a plurality of wireless network channels within a preset distance to the setting wireless network is determined.

At block 305, a first wireless network channel currently used by the wireless network module is determined according to the connection information.

At block 306, it is determined whether signal intensity of the first wireless network channel is less than preset signal intensity.

If the answer is "Yes", operations at block 307 are performed.

If the answer is "Not", operations at block 309 are performed.

At block 307, a second wireless network channel is selected from the plurality of wireless network channels, and signal intensity of the second wireless network channel is greater than or equal to the preset signal intensity.

At block 308, a wireless network channel used by the wireless network module is switched to the second wireless network channel.

At block 309, the wireless network channel used by the wireless network module is not switched.

At block 310, in response to the at least one event further includes a second event, data flows associated with the second event are distributed to the data network module for data processing, and important priority of the second event is less than the preset priority.

At block 311, in response to the first event being completely processed and the second event being not completely processed, remaining data flows associated with the second event are distributed to the wireless network module and the data network module for data processing together.

At block 312, it is determined whether network quality of the setting wireless network is less than or equal to network quality of the mobile data network.

If the answer is "Yes", operations at block 313 are performed.

If the answer is "Not", operations at block 317 are performed.

At block 313, it is determined whether a data plan of the mobile data network is a special data plan. The special data plan includes an exclusive data plan jointly launched by a third party and an operator, or an unlimited data plan separately launched by the operator. The exclusive data plan allows a specific application to use without limiting data.

If the answer is "Yes", operations at block 314 are performed.

If the answer is "Not", operations at block 317 are performed.

At block 314, a type of the special data plan is determined.

At block 315, in response to the type of the special data plan being the exclusive data plan, it is determined whether an allowed specific application includes an application associated with the at least one event.

If the allowed specific application includes the application associated with the at least one event, operations at block 321 are performed.

If the allowed specific application does not include the application associated with the at least one event, operations at block 317 are performed.

At block 316, it is determined that the type of the special data plan is the unlimited data plan.

At block 317, in response to determining that the specific application does not include the application associated with the at least one event, or the special data plan is not the unlimited data plan, the data flows associated with the at least one event are distributed to the wireless network module and the data network module for data processing together.

At block 318, first peak transmission rates of the wireless network module and the data network module are obtained respectively.

At block 319, offload weights of the wireless network module and the data network module are determined respectively according to obtained first peak transmission rates.

At block 320, the data flows associated with the at least one event are distributed to the wireless network module and the data network module according to determined offload weights.

At block 321, in response to determining that the specific application includes the application associated with the at least one event or the special data plan is the unlimited data plan, the data flows associated with the at least one event are distributed to the data network module for data processing.

It should be noted that for a specific implementation process of the embodiment, a specific implementation process described in the above method embodiment can be referred. There is no specific description here.

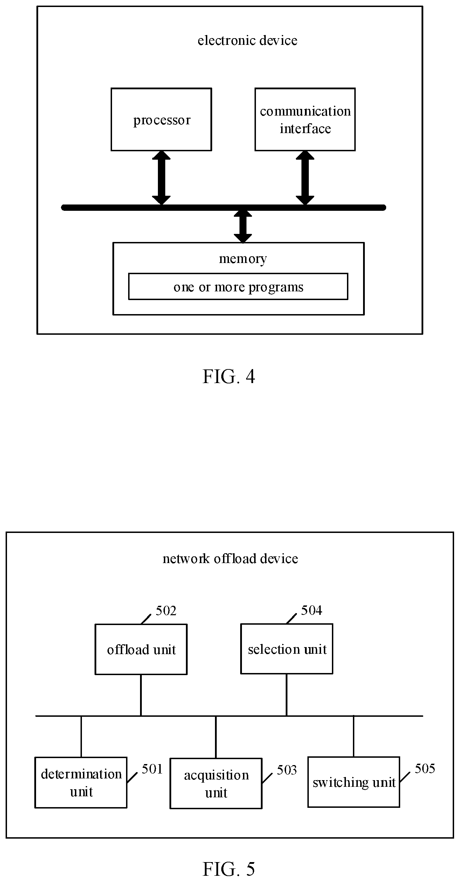

In accordance with the above embodiments shown in FIG. 2 and FIG. 3, as shown in FIG. 4, FIG. 4 is a structural schematic diagram of another electronic device provided by some embodiments of the present disclosure. The electronic device is currently in a state where link aggregation is turned on. In response to the electronic device being in the state where the link aggregation is turned on, the electronic device may process data flows through a data network module corresponding to a mobile data network and a wireless network module corresponding to a setting wireless network. As shown in figure, the electronic device may include a processor, a memory, a communication interface, and one or more programs. The one or more programs are stored in the memory and configured to be executed by the processor. The one or more programs may include instructions for performing the following operations.

In response to at least one event currently processed by the electronic device including a first event, a current moving speed of the electronic device is determined, and important priority of the first event is greater than or equal to preset priority.

In response to the current moving speed of the electronic device being greater than or equal to a first threshold, data flows associated with the first event are distributed to the wireless network module for data processing.

In one embodiment of the present disclosure, the above programs may further include instructions for performing the following operations.

In response to the at least one event further including a second event, data flows associated with the second event are distributed to the data network module for data processing, and important priority of the second event is less than the preset priority.

In one embodiment of the present disclosure, after distributing the data flows associated with the first event to the wireless network module for data processing, the above programs may further include instructions for performing the following operations.

In response to the first event being completely processed and the second event being not completely processed, remaining data flows associated with the second event are distributed to the wireless network module and the data network module for data processing together.

In one embodiment of the present disclosure, the above programs may further include instructions for performing the following operations.

In response to the current moving speed of the electronic device being less than the first threshold, first peak transmission rates of the wireless network module and the data network module are obtained respectively.

Offload weights of the wireless network module and the data network module are determined respectively according to obtained first peak transmission rates.

Data flows associated with at least one event are distributed to the wireless network module and the data network module according to determined offload weights.

In one embodiment of the present disclosure, before the data flows associated with the at least one event are distributed to the wireless network module and the data network module according to determined offload weights, the above programs may further include instructions for performing the following operations.

In response to network quality of the setting wireless network being less than or equal to network quality of the mobile data network, it is determined whether a data plan of the mobile data network is a special data plan. The special data plan may include an exclusive data plan jointly launched by a third party and an operator, or an unlimited data plan separately launched by the operator, and the exclusive data plan allows a specific application to use without limiting data.

In response to determining that the specific application dose not include an application associated with the at least one event, or that the special data plan is not the unlimited data plan, the data flows associated with the at least one event are distributed to the wireless network module and the data network module for data processing together.

In one embodiment of the present disclosure, the above programs may further include instructions for performing the following operations.

In response to determining that the specific application includes the application associated with the at least one event, or the special data plan is the unlimited data plan, the data flows associated with the at least one event are distributed to the data network module for data processing.

In one embodiment of the present disclosure, after the data flows associated with the first event are distributed to the wireless network module for data processing, the above programs may further include instructions for performing the following operations.

Connection information of a plurality of wireless network channels within a preset distance to the setting wireless network is determined.

A first wireless network channel currently used by the wireless network module according to the connection information.

In response to signal intensity of the first wireless network channel being less than preset signal intensity, a second wireless network channel is selected from the plurality of wireless network channels, and signal intensity of the second wireless network channel is greater than or equal to the preset signal intensity.

A wireless network channel used by the wireless network module is switched to the second wireless network channel.

It should be noted that for a specific implementation process of the embodiment, a specific implementation process described in the above method embodiment can be referred. There is no specific description here.

Functional units of the electronic device can be divided according to the method embodiment. For example, functional units can be divided according to each function corresponding to each functional unit, or two or more functions can be integrated into one processing unit. An integrated unit can be realized in a form of hardware or software function unit. It should be noted that division of units in the embodiment of the present disclosure is schematic, the division of units is only a logical function division, and there can be another division method in actual implementation.

The following is a device embodiment of the present disclosure. The device provided by the present disclosure is used to perform methods implemented by the method embodiment of the present disclosure. Referring to FIG. 5, FIG. 5 is a network offload device provided by some embodiment of the present disclosure. The network offload device is applied to an electronic device. The electronic device is currently in a state where link aggregation is turned on. In response to the electronic device being in the state where the link aggregation is turned on, the electronic device may process the data flows through a data network module corresponding to a mobile data network and a wireless network module corresponding to a setting wireless network. The device may include a determination unit 501 and an offload unit 502.

The determination unit 501 is configured to determine a current moving speed of the electronic device in response to at least one event currently processed by the electronic device including a first event, and important priority of the first event is greater than or equal to preset priority.

The offload unit 502 is configured to distribute data flows associated with the first event to the wireless network module for data processing in response to the current moving speed of the electronic device being greater than or equal to a first threshold.

In one embodiment of the present disclosure, in response to the at least one event further including a second event, the offload unit 502 is further configured to distribute data flows associated with the second event to the data network module for data processing, and important priority of the second event is less than the preset priority.

In one embodiment of the present disclosure, after distributing the data flows associated with the first event to the wireless network module for data processing, the offload unit 502 is further configured to distribute remaining data flows associated with the second event to the wireless network module and the data network module for data processing together in response to the first event being completely processed and the second event being not completely processed.

In one embodiment of the present disclosure, the device may further include an acquisition unit 503 configured to obtain a first peak transmission rates of the wireless network module and the data network module in response to the current moving speed of the electronic device being less than the first threshold.

The determination unit 501 is further configured to determine offload weights of the wireless network module and the data network module are determined respectively according to obtained first peak transmission rates.

The offload unit 502 is further configured to distribute data flows associated with at least one event to the wireless network module and the data network module according to determined offload weights.

In one embodiment of the present disclosure, before the data flows associated with the at least one event are distributed the wireless network module and the data network module according to the determined offload weights, the determination unit 501 is further configured to determine whether a data plan of the mobile data network is a special data plan in response to network quality of the setting wireless network being less than or equal to network quality of the mobile data network. The special data plan may be an exclusive data plan jointly launched by a third party and an operator, or an unlimited data plan separately launched by the operator, and the exclusive data plan allows a specific application to use without limiting data.

The offload unit 502 is further configured to distribute the data flows associated with the at least one event to the wireless network module and the data network module for data processing together, in response to determining that the specific application dose not include an application associated with the at least one event, or that the special data plan is not the unlimited data plan.

In one embodiment of the present disclosure, the offload unit 502 is further configured to distribute the data flows associated with the at least one event to the data network module for data processing, in response to determining that the specific application includes the application associated with the at least one event, or the special data plan is the unlimited data plan.

In one embodiment of the present disclosure, after the data flows associated with the first event are distributed to the wireless network module for data processing, the determination unit 502 is further configured to determine that connection information of a plurality of wireless network channels within a preset distance to the setting wireless network, and determine a first wireless network channel currently used by the wireless network module is determined according to the connection information.

The device further includes a selection unit 504 and a switching unit 505.

The selection unit 504 is configured to select a second wireless network channel from the plurality of wireless network channels in response to signal intensity of the first wireless network channel being less than preset signal intensity. Signal intensity of the second wireless network channel is greater than or equal to the preset signal intensity.

A switching unit 505 is configured to switch a wireless network channel used by the wireless network module to the second wireless network channel.

It should be noted that the determination unit 501, the offload unit 502, the acquisition unit 503, the selection unit 504 and the switching unit 505 can be realized by the processing unit.

The embodiment of the present disclosure further provides a computer storage medium. The computer storage medium stores a computer program for electronic data exchange. The computer program enables the computer to perform part or all of the operations of any method recorded in the method embodiment, and the computer may include an electronic device.

The embodiment of the present disclosure also provides a computer program product. The computer program product includes a non-transitory computer-readable storage medium storing the computer program. The computer program can be operated to make the computer perform part or all of the operations of any method recorded in the method embodiment. The computer program product can be a software installation package, and the computer may include an electronic device.

It should be noted that in order to describe simply, the above-mentioned method embodiments are all described as a series of action combinations. However, those skilled in the art should know that the present disclosure is not limited by the described action sequence, because according to the present disclosure, some operations can be performed in other sequences or at the same time. Furthermore, those skilled in the art should also know that the embodiments described in the description are preferred embodiments, and the actions and modules involved are not necessarily necessary for the present disclosure.

In the above embodiments, the description of each embodiment has its own emphasis. For the part not specifically described in one embodiment, the related description of other embodiments can be referred.

In some embodiments provided by the present disclosure, it should be understood that the disclosed device can be realized in other ways. For example, the device embodiments described above are only schematic. For example, division of the above units is only a logical function division. In actual implementation, there may be another division method, for example, a plurality of units or components may be combined or integrated into another system, or some features may be ignored or not implemented. On the other hand, mutual coupling or direct coupling or communication connection shown or discussed can be through some interfaces, indirect coupling or communication connection between devices or units can be electrical or other forms.

Units described as separate units may or may not be physically separated. Components as displayed units may or may not be physical units, that is, the components may be located in one place or distributed to a plurality of network units. Some or all of the units can be selected according to actual needs to achieve the purpose of the embodiments.

In addition, each functional unit in each embodiment of the present disclosure can be integrated in one processing unit, each unit can exist physically alone, or two or more units can be integrated in one unit. The integrated unit can be realized in a form of hardware or software function unit.

If the integrated unit is realized in the form of software functional unit and sold or used as an independent product, the integrated unit can be stored in a computer readable memory. Therefore, the technical solution of the present disclosure can be embodied in a form of a software product. The software product is stored in a memory, including several instructions, so that a computer device (such as a personal computer, a server, a network device, etc.) can perform all or part of the operations of the methods provided by the above embodiments of the present disclosure. The above mentioned memory may include flash disk, read-only memory (ROM), random access memory (RAM), mobile hard disk, disk or CD and other media that can store program codes.

Those skilled in the art can understand that all or part of the operations in various methods of the above embodiments can be completed by instructing relevant hardware through a program. The program can be stored in a computer-readable memory. The computer-readable memory can include a flash disk, a read-only memory (ROM) and a random access memory (RAM), disk or CD, and the like.

The embodiments of the present disclosure are described in detail. In the description, specific examples are applied to explain the principle and embodiments of the invention. The description of the above embodiments is only used to help understand the method and core idea of the invention. Meanwhile, for those skilled in the art, according to the idea of the invention the specific implementations and application scope will be changed. In summary, the contents of the specification should not be interpreted as the limitation of the invention

## Claims

1. A network offload method, applied to an electronic device, the electronic device being currently in a state where link aggregation is turned on, and the electronic device processing data flows through a data network module corresponding to a mobile data network and a wireless network module corresponding to a setting wireless network in response to the electronic device being in the state where the link aggregation is turned on, comprising:
determining a current moving speed of the electronic device in response to at least one event currently processed by the electronic device comprising a first event, and important priority of the first event being greater than or equal to preset priority; and
distributing data flows associated with the first event to the wireless network module for data processing in response to the current moving speed of the electronic device being greater than or equal to a first threshold.

2. The method as claimed in claim 1, further comprising:
distributing data flows associated with a second event to the data network module for data processing in response to the at least one event comprising the second event, and important priority of the second event being less than the preset priority.

3. The method as claimed in claim 2, wherein after distributing the data flows associated with the first event to the wireless network module for data processing, the method further comprises:
distributing to-be-processed data flows associated with the second event to the wireless network module and the data network module for data processing in response to the first event being completely processed and the second event being not completely processed.

4. The method as claimed in any one of claims 1-3, further comprising:
obtaining a first peak transmission rate of the wireless network module and a first peak transmission rate of the data network module in response to the current moving speed of the electronic device being less than the first threshold;
determining an offload weight of the wireless network module and an offload weight of the data network module according to obtained first peak transmission rates; and
distributing data flows associated with the at least one event to the wireless network module and the data network module according to determined offload weights.

5. The method as claimed in claim 4, wherein the determining the offload weight of the wireless network module and the offload weight of the data network module according to the obtained first peak transmission rates, comprises:determining the offload weight of the wireless network module and the offload weight of the data network module according to the obtained first peak transmission rates and a first formula, wherein the first formula is W=V/M, the W is an offload weight, the Visa peak transmission rate, and the M is a sum of the first peak transmission rates.

6. The method as claimed in claim 4, the determining the offload weight of the wireless network module and the offload weight of the data network module according to the obtained first peak transmission rates, comprises:
determining offload priority of the wireless network module and offload priority of the data network module; and
determining the offload weight of the wireless network module and the offload weight of the data network module according to the obtained first peak transmission rates, determined offload priority and a second formula, wherein the second formula is W=[(V/M)+(X/Y)]/2, the W is an offload weight, the V is a peak transmission rate, and the M is a sum of the obtained first peak transmission rates, and the X is offload priority, and Y is a sum of determined offload priority.

7. The method as claimed in any one of claims 4-6, wherein before distributing the data flows associated with the at least one event to the wireless network module and the data network module according to the determined offload weights, the method further comprises:
determining whether a data plan of the mobile data network is a special data plan in response to network quality of the setting wireless network being less than or equal to network quality of the mobile data network, wherein the special data plan comprises an exclusive data plan jointly launched by a third party and an operator, or an unlimited data plan separately launched by the operator, and the exclusive data plan allows a specific application to use without limiting data; and
distributing the data flows associated with the at least one event to the wireless network module and the data network module for data processing in response to determining that the specific application not comprising an application associated with the at least one event, or that the special data plan is not the unlimited data plan.

8. The method as claimed in claim 7, further comprising:
distributing the data flows associated with the at least one event to the data network module for data processing in response to determining that the specific application comprising the application associated with the at least one event, or the special data plan is the unlimited data plan.

9. The method as claimed in any one of claims 1-8, wherein after distributing the data flows associated with the first event to the wireless network module for data processing, the method further comprises:
determining connection information of a plurality of wireless network channels within a preset distance to the setting wireless network;
determining a first wireless network channel currently used by the wireless network module according to the connection information;
selecting a second wireless network channel from the plurality of wireless network channels in response to signal intensity of the first wireless network channel being less than preset signal intensity, wherein signal intensity of the second wireless network channel is greater than or equal to the preset signal intensity; and
switching a wireless network channel used by the wireless network module to the second wireless network channel.

10. A network offload device, applied to an electronic device, the electronic device being currently in a state where link aggregation is turned on, and in response to the electronic device being in the state where the link aggregation is turned on, the electronic device processing data flows through a data network module corresponding to a mobile data network and a wireless network module corresponding to a setting wireless network, comprising:
a determination unit configured to determine a current moving speed of the electronic device in response to at least one event currently processed by the electronic device comprising a first event, wherein important priority of the first event is greater than or equal to a preset priority; and
an offload unit configured to distribute data flows associated with the first event to the wireless network module for data processing in response to the current moving speed of the electronic device being greater than or equal to a first threshold.

11. The device as claimed in claim 10, wherein the offload unit is further configured to distribute data flows associated with a second event to the data network module for data processing in response to the at least one event comprising the second event, and important priority of the second event being less than the preset priority.

12. The device as claimed in claim 11, wherein after distributing the data flows associated with the first event to the wireless network module for data processing, the offload unit is further configured to distribute to-be-processed associated with the second event to the wireless network module and the data network module for data processing in response to the first event being completely processed and the second event being not completely processed.

13. The device as claimed in any one of claims 10-12, comprising:
an acquisition unit configured to obtain current a first peak transmission rate of the wireless network module and a first peak transmission rate of the data network module in response to the current moving speed of the electronic device being less than the first threshold; and
the determination unit being configured to determine an offload weight of the wireless network module and an offload weight of the data network module according to obtained first peak transmission rates; the offload unit being configured to distribute the data flows associated with the at least one event to the wireless network module and the data network module according to determined offload weights.

14. The device as claimed in claim 13, wherein in determining the offload weight of the wireless network module and the offload weight of the data network module according to the obtained first peak transmission rates, the determination unit is configured to:
determine the offload weight of the wireless network module and the offload weight of the data network module according to the obtained first peak transmission rates and a first formula, wherein the first formula is W=V/M, the W is an offload weight, the Visa peak transmission rate, and the M is a sum of the obtained first peak transmission rates.

15. The device as claimed in claim 13, wherein in determining the offload weight of the wireless network module and the offload weight of the data network module according to the obtained first peak transmission rates, the determination unit is configured to:
determine offload priority of the wireless network module and offload priority of the data network module; and
determine the offload weight of the wireless network module and the offload weight of the data network module respectively according to the obtained first peak transmission rates, determined offload priority and a second formula, wherein the second formula is W= [(V/ M)+(X/ Y)]/ 2, the W is an offload weight, the V is a peak transmission rate, and the M is a sum of the obtained first peak transmission rates, and the X is the offload priority, and Y is a sum of determined offload priority.

16. The device as claimed in any one of claims 13-15, wherein, before distributing data flows associated with the at least one event to the wireless network module and the data network module according to the determined offload weights, the determination unit is configured to determine whether a data plan of the mobile data network is a special data plan in response to network quality of the setting wireless network being less than or equal to network quality of the mobile data network, wherein the special data plan comprises an exclusive data plan jointly launched by a third party and an operator, or an unlimited data plan separately launched by the operator, and the exclusive data plan allows a specific application to use without limiting data; and
the offload unit is configured to distribute the data flows associated with the at least one event to the wireless network module and the data network module for data processing in response to determining that the specific application not comprising an application associated with the at least one event, or that the special data plan is not the unlimited data plan.

17. The device as claimed in claim 16, wherein the offload unit is further configured to distribute the data flows associated with the at least one event to the data network module for data processing in response to determining that the specific application comprising the application associated with the at least one event, or the special data plan is the unlimited data plan.

18. The device as claimed in any one of claims 10-17, wherein after the data flows associated with the first event are distributed to the wireless network module for data processing, the determination unit 502 is further configured to determine connection information of a plurality of wireless network channels within a preset distance to the setting wireless network, and determine a first wireless network channel currently used by the wireless network module according to the connection information;
the device further comprises a selection unit configured to select a second wireless network channel from the plurality of wireless network channels in response to signal intensity of the first wireless network channel being less than preset signal intensity, selecting, wherein signal intensity of the second wireless network channel is greater than or equal to the preset signal intensity; and
a switching unit configured to switch a wireless network channel used by the wireless network module to the second wireless network channel.

19. An electronic device, comprising a processor, a memory, a communication interface, and one or more programs, wherein the one or more programs are stored in the memory and configured to be executed by the processor, the one or more programs comprise instructions for performing the operations in the method as claimed in any one of claims 1-9.

20. A computer-readable storage medium, storing computer programs that, when executed by a processor, cause the processor to realize the method as claimed in any one of claims 1-9.
